# EUROPEAN PATENT APPLICATION

(11) **EP 4 542 673 A1**
(43) Date of publication of application: **23.04.2025**
(21) Application number: 24196827.0
(22) Date of filing: 27.08.2024
(51) Int. Cl.: H01M 4/133, H01M 4/38, H01M 4/485, H01M 4/62, H01M 10/0525

(54) **LITHIUM-ION BATTERY ANODE WITH IMPROVED TEMPERATURE RISE PERFORMANCE AND LITHIUM-ION BATTERY**

(30) Priority: 06.09.2023 CN 202311147458
(71) Applicant: Techtronic Cordless GP, Anderson, SC 29621 (US)
(72) Inventor: LU, Chang Jian, Dongguan City (CN); WANG, Na, Dongguan City (CN); ZHANG, Pan, Dongguan City (CN); YUAN, Xiao Peng, Dongguan City (CN); HUANG, Xin Yue, Dongguan City (CN); YANG, Qiao, Dongguan City (CN)
(74) Representative: Novagraaf Group

(57) **Abstract**

The present invention provides a lithium ion battery negative electrode with improved temperature rise performance, and a lithium ion battery. The negative electrode for a lithium ion battery comprises a negative electrode current collector and a negative electrode material applied to the negative electrode current collector, the negative electrode material containing a conductive agent, the conductive agent comprising SP and CNT, wherein the mass ratio of SP to CNT is 30 - 1500, preferably 35 - 100, more preferably 40 - 70, and further preferably 50 - 55. The lithium ion battery comprises a positive electrode, a negative electrode, an electrolyte and a casing, wherein the negative electrode is the negative electrode for a lithium ion battery as described above. In the present invention, the temperature rise performance of a lithium ion battery is improved by using a variety of conductive agents and adjusting types and proportions within the conductive agent, without increasing the proportion of conductive agent in the electrode material formula.

## Description

### Technical field

The present invention relates to the field of batteries, in particular to a lithium ion battery negative electrode with improved temperature rise performance, and a lithium ion battery.

### Background art

Lithium ion batteries release heat during charging and discharging; macroscopically, this is manifested as a rise in battery temperature, and if the battery temperature rise during charging or discharging is too high, it will accelerate ageing of the battery's internal chemical system, thereby reducing the battery's service life. In addition, fast charging is currently one of the main directions of development of lithium ion batteries; with high-rate charging, heat generation inside the battery increases, causing the battery temperature rise to increase sharply. An excessively high temperature inside the battery will affect the stability of the positive/negative electrode materials and liquid electrolyte, and may even cause the separator to contract, resulting in contact and short-circuiting between the positive and negative electrodes, which poses a major safety hazard. In existing designs for reducing the temperature rise due to self-heating of lithium ion batteries, the following are often considered: reducing the electrode plate surface density, increasing the current collector thickness, and increasing the proportion of conductive agent in the formula, etc.

However, under the same capacity requirements, reducing the electrode plate surface density will inevitably increase the amount of auxiliary materials (such as the current collector and the separator) used, not only reducing the energy density of the battery but also increasing costs; increasing the current collector thickness will also reduce the energy density of the battery; and increasing the proportion of conductive agent in the formula will reduce the energy density of the battery and also increase the difficulty of dispersion in homogenization, thus affecting the uniformity of the battery.

### Summary of the invention

An objective of the present invention is to provide a lithium ion battery negative electrode with improved temperature rise performance, and a lithium ion battery. The temperature rise performance of the lithium ion battery is improved by using a variety of conductive agents and adjusting types and proportions within the conductive agent, without increasing the proportion of conductive agent in the electrode material formula.

One aspect of the present invention provides a negative electrode for a lithium ion battery, the negative electrode comprising a negative electrode current collector and a negative electrode material applied to the negative electrode current collector, the negative electrode material containing a conductive agent, the conductive agent comprising SP and CNT, wherein the mass ratio of SP to CNT is 30 - 1500, preferably 35 - 100, more preferably 40 - 70, and further preferably 50 - 55.

In an embodiment, the content of the conductive agent in the negative electrode material is 1 wt% - 4 wt%, preferably 3 wt% - 3.5 wt%, more preferably 3.1 wt% - 3.3 wt%, and further preferably 3.19 wt%.

In an embodiment, the content of SP in the negative electrode material is 1 wt% - 4 wt%, preferably 3 wt% - 3.5 wt%, more preferably 3.1 wt% - 3.3 wt%, and further preferably 3.13 wt%.

In an embodiment, the content of CNT in the negative electrode material is 0.01 wt% - 0.12 wt%, preferably 0.02 wt% - 0.1 wt%, more preferably 0.05 wt% - 0.08 wt%, and further preferably 0.06 wt%.

In an embodiment, in the negative electrode material, the CNT is SWCNT.

In an embodiment, the negative electrode material further comprises a negative electrode active material and a binder; the negative electrode active material is selected from one or more of graphite, soft carbon, hard carbon, silicon-carbon composites, elemental silicon and SiOₓ; and the binder is selected from one or more of CMC, SBR, PVP, PAA and PVDF.

In an embodiment, in the negative electrode material, the negative electrode active material is SiOₓ and the binder is CMC and SBR.

In an embodiment, the mass ratio of SiOₓ : SP : SWCNT : CMC : SBR in the negative electrode material is (90 - 95) : (1 - 4) : (0.01 - 0.12) : (1 - 2) : (1 - 2), preferably (93 - 94) : (3 - 3.5) : (0.02 - 0.1) : (1.2 - 1.6) : (1.6 - 2), more preferably (93.4 - 93.8) : (3.1 - 3.3) : (0.05 - 0.08) : (1.3 - 1.5) : (1.7 - 1.9), and further preferably 93.58 : 3.13 : 0.06 : 1.43 : 1.8.

Another aspect of the present invention provides a lithium ion battery, comprising a positive electrode, a negative electrode, an electrolyte and a casing, wherein the negative electrode is the negative electrode for a lithium ion battery as described above.

In an embodiment, the positive electrode comprises a positive electrode current collector and a positive electrode material applied to the positive electrode current collector, the positive electrode material containing a conductive agent, the conductive agent comprising SP.

In an embodiment, the content of the conductive agent in the positive electrode material is 0.1 wt% - 3 wt%, preferably 1 wt% - 2.5 wt%, more preferably 2 wt% - 2.5 wt%, and further preferably 2.2 wt%.

In an embodiment, the content of SP in the positive electrode material is 0.1 wt% - 3 wt%, preferably 1 wt% - 2.5 wt%, more preferably 2 wt% - 2.5 wt%, and further preferably 2.2 wt%.

In an embodiment, the conductive agent further comprises CNT, and the content of CNT in the positive electrode material is 0.01 wt% - 1.5 wt%, preferably 0.01 wt% - 0.4 wt%, and more preferably 0 wt%.

In an embodiment, in the positive electrode material, the CNT is HCNT.

In an embodiment, the positive electrode material comprises a positive electrode active material and a binder; the positive electrode active material is selected from one or more of lithium nickel manganese cobalt oxide, lithium cobalt oxide, lithium nickel oxide, lithium manganese oxide, lithium nickel cobalt aluminium oxide and lithium iron phosphate; and the binder is selected from one or more of CMC, SBR, PVP and PVDF.

In an embodiment, in the positive electrode material, the positive electrode active material is NCM811 and the binder is PVDF.

In an embodiment, the positive electrode material further comprises Li₂CO₃, the content thereof being 0.1 wt% - 3 wt%, preferably 0.2 wt% - 2 wt%, more preferably 0.3 wt% - 0.7 wt%, and further preferably 0.5 wt%.

In an embodiment, the mass ratio of NCM811 : SP : Li₂CO₃ : PVDF in the positive electrode material is (93 - 99) : (0.1 - 3) : (0.1 - 3) : (1 - 2), preferably (94 - 98) : (1 - 2.5) : (0.2 - 2) : (1.2 - 1.6), more preferably (95 - 97) : (2 - 2.5) : (0.3 - 0.7) : (1.2 - 1.4), and further preferably 96 : 2.2 : 0.5 : 1.3.

In an embodiment, the electrolyte is an organic electrolyte, a non-aqueous electrolyte, an organic solid electrolyte or an inorganic solid electrolyte.

In an embodiment, the lithium ion battery does not comprise a tab.

Another aspect of the present invention provides a use of the negative electrode for a lithium ion battery as described above for reducing lithium ion battery temperature rise.

### Brief description of the drawings

Fig. 1 is a graph showing the effect of SWCNT content in negative electrode material on temperature rise (30 A discharge).
Fig. 2 is a partial enlarged drawing of Fig. 1.
Fig. 3 is a graph showing the effect of SWCNT content in negative electrode material on temperature rise (40 A discharge).
Fig. 4 is a partial enlarged drawing of Fig. 3.
Fig. 5 is a graph showing the effect of HCNT content in positive electrode material on temperature rise (30 A discharge).
Fig. 6 is a partial enlarged drawing of Fig. 5.
Fig. 7 is a graph showing the effect of HCNT content in positive electrode material on temperature rise (40 A discharge).
Fig. 8 is a partial enlarged drawing of Fig. 7.

### Detailed description of embodiments

The technical solution of the present invention is explained further below with reference to the drawings and embodiments, but is not limited to this; all amendments or equivalent substitutions made to or in the technical solution of the present invention without departing from the scope of the spirit thereof shall be included in the scope of protection of the present invention. All interval ranges defined in the present invention include the endpoint values.

Heat generated inside a lithium ion battery during use has four main sources: reaction heat Qᵣ, Joule heat Qⱼ, polarization heat Qₚ and decomposition heat Qₛ. Qᵣ is heat generated by chemical reactions inside the lithium ion battery, manifested as an endothermic reaction during charging and an exothermic reaction during discharging; Qⱼ is heat lost in the lithium ion battery due to internal resistance; Qₚ is heat generated in the lithium ion battery due to the presence of polarization during charging/discharging; and Qₛ is heat generated in the lithium ion battery during self-discharge or side reactions. During high-rate charging, battery polarization increases, the proportion of Joule heat Qⱼ and polarization heat Qₚ increases, and the amount of heat generated increases noticeably. It can be seen from the above analysis that during high-rate charging, the battery temperature rise is mainly due to heat generated by polarization internal resistance and battery internal resistance; reducing the battery internal resistance is the main solution for mitigating the battery temperature rise and improving high-rate charging.

A lithium ion battery comprises a casing, and further comprises a negative electrode, a positive electrode and an electrolyte, which are accommodated in the casing.

The negative electrode is in the form of a plate for example, comprising a negative electrode current collector and negative electrode material. The negative electrode current collector may for example have a thickness of 5µm - 50 µm. The current collector is a strong conductor of electrons which is not chemically active, used for continuously flowing current at the electrode during discharging or charging. The current collector may take the form of foil, plate or mesh, etc.; there are no particular restrictions, as long as it corresponds to the target form. Preferably, the current collector is in the form of foil. Examples of current collectors may be aluminium foil, aluminium mesh, perforated aluminium sheet, expanded aluminium sheet, stainless steel foil, stainless steel mesh, perforated stainless steel sheet, expanded stainless steel sheet, expanded nickel, non-woven nickel fabric, copper foil, copper mesh, perforated copper sheet, expanded copper sheet, titanium foil, titanium mesh, non-woven carbon fabric, woven carbon fabric, etc. Preferably, the negative electrode current collector is copper foil.

The negative electrode material is formed on a surface of the negative electrode current collector. The negative electrode material may be formed on only one side of the negative electrode current collector. The negative electrode material could also be formed on front and back sides of the negative electrode current collector. The negative electrode material may for example have a thickness of 10 µm - 200 µm.

The negative electrode material contains a negative electrode active material. The negative electrode material could also be formed substantially of negative electrode active material alone, and may comprise optional components. The negative electrode active material may for example contain one or more components selected from graphite, soft carbon, hard carbon, silicon-carbon composites, elemental silicon and SiOₓ, preferably SiOₓ.

The negative electrode material may also comprise a binder, which binds solids together. The binder may comprise optional components. Examples of the binder are carboxymethylcellulose (CMC), styrene butadiene rubber (SBR), polyvinylpyrrolidone (PVP), polyvinylidene fluoride (PVDF), polybenzimidazole, polyimide, polyvinyl acetate, polyacrylonitrile, polyvinyl alcohol, starch, hydroxypropylmethylcellulose, regenerated cellulose, polyvinylpyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylenesulfone, polyacetal, polyphenylene ether, polybutylene terephthalate, ethylene-propylene-diene terpolymer (EPDM), sulfonated EPDM, fluorocarbon rubber and various copolymers, preferably one or more components selected from CMC, SBR, PVP, PAA and PVDF. As a preferred, non-limiting example, the binder is CMC and SBR. In the negative electrode material, the blended amount of the binder may for example be 0.1 wt% - 10 wt%, preferably 1 wt% - 5 wt%.

In addition to the negative electrode active material, a suitable amount of a conductive agent is added to the negative electrode material, to reduce the battery internal resistance. The conductive agent may comprise optional components. The conductive agent may be selected from one or more of superconductive carbon black (SP), carbon nanotubes (CNT), conductive carbon black, carbon fibre and graphite conductive agents. Preferably, the conductive agent in the negative electrode material comprises SP and CNT. As a further preferred embodiment, the CNT are single-walled carbon nanotubes (SWCNT). The content of the conductive agent in the negative electrode material is 1 wt% - 4 wt%, preferably 3 wt% - 3.5 wt%, more preferably 3.1 wt% - 3.3 wt%, and further preferably 3.19 wt%. The content of SP in the negative electrode material is 1 wt% - 4 wt%, preferably 3 wt% - 3.5 wt%, more preferably 3.1 wt% - 3.3 wt%, and further preferably 3.13 wt%. The content of CNT in the negative electrode material is 0.01 wt% - 0.12 wt%, preferably 0.02 wt% - 0.1 wt%, more preferably 0.05 wt% - 0.08 wt%, and further preferably 0.06 wt%. The mass ratio of SP to CNT in the negative electrode material is 30 - 1500, preferably 35 - 100, more preferably 40 - 70, and further preferably 50 - 55. In a preferred embodiment, the mass ratio of SP to CNT in the negative electrode material is 51 - 54, or 52 - 53, or 52 - 52.5, or 52.16.

In a preferred embodiment, the negative electrode comprises a negative electrode material layer and a negative electrode current collector made of copper foil, wherein the negative electrode material layer comprises negative electrode material applied to two surfaces of the negative electrode current collector. In the negative electrode material, SiOₓ acts as the negative electrode active material, SP and SWCNT act as the conductive agent, and CMC and SBR act as the binder. The mass ratio of SiOₓ : SP : SWCNT : CMC : SBR in the negative electrode material is (90 - 95) : (1 - 4) : (0.01 - 0.12) : (1 - 2) : (1 - 2), preferably (93 - 94) : (3 - 3.5) : (0.02 - 0.1) : (1.2 - 1.6) : (1.6 - 2), more preferably (93.4 - 93.8) : (3.1 - 3.3) : (0.05 - 0.08) : (1.3 - 1.5) : (1.7 - 1.9), and further preferably 93.58 : 3.13 : 0.06 : 1.43 : 1.8. In an exemplary embodiment, the mass ratio of SiOₓ : SP : SWCNT : CMC : SBR in the negative electrode material is 93.58 : 3 : 0.12 : 1.5 : 1.8. In an exemplary embodiment, in the negative electrode material, the conductive agent is SP, and no SWCNT is contained, wherein the mass ratio of SiOₓ : SP : CMC : SBR is 93.58 : 3.25 : 1.37 : 1.8. In a preferred embodiment, the mass ratio of SiOₓ : SP : SWCNT : CMC : SBR in the negative electrode material is 93.58 : 3.13 : 0.06 : 1.43 : 1.8.

In a preferred embodiment, negative electrode uncoated parts are provided at two ends of the negative electrode current collector. The negative electrode uncoated part is a region on one or two surfaces of the negative electrode where no negative electrode material layer is formed. The negative electrode uncoated part is equipped with a negative electrode tab. Insulating tape is wound on a part of the negative electrode tab that projects from an electrode assembly, to prevent short circuits. The negative electrode tab is electrically connected to the bottom of the casing.

In a further preferred embodiment, the negative electrode comprises no negative electrode tab, and is electrically connected to the bottom of the casing using a negative electrode current collector uncoated part.

The positive electrode is in the form of a plate for example, comprising a positive electrode current collector and positive electrode material. The positive electrode current collector may for example have a thickness of 5µm - 50 µm. The current collector is a strong conductor of electrons which is not chemically active, used for continuously flowing current at the electrode during discharging or charging. The current collector may take the form of foil, plate or mesh, etc.; there are no particular restrictions, as long as it corresponds to the target form. Preferably, the current collector is in the form of foil. Examples of current collectors may be aluminium foil, aluminium mesh, perforated aluminium sheet, expanded aluminium sheet, stainless steel foil, stainless steel mesh, perforated stainless steel sheet, expanded stainless steel sheet, expanded nickel, non-woven nickel fabric, copper foil, copper mesh, perforated copper sheet, expanded copper sheet, titanium foil, titanium mesh, non-woven carbon fabric, woven carbon fabric, etc. Preferably, the positive electrode current collector is aluminium foil.

The positive electrode material is formed on a surface of the positive electrode current collector. The positive electrode material may be formed on only one side of the positive electrode current collector. The positive electrode material could also be formed on front and back sides of the positive electrode current collector. The positive electrode material may for example have a thickness of 10 µm - 200 µm.

The positive electrode material contains a positive electrode active material. The positive electrode material may be formed substantially of positive electrode active material alone, and may comprise optional components. The positive electrode active material may for example contain one or more components selected from lithium nickel manganese cobalt oxide, lithium cobalt oxide, lithium nickel oxide, lithium manganese oxide, lithium nickel cobalt aluminium oxide and lithium iron phosphate, preferably lithium nickel manganese cobalt oxide, and further preferably NCM811.

The positive electrode material may also comprise a binder, which binds solids together. The binder may comprise optional components. Examples of the binder are carboxymethylcellulose (CMC), styrene butadiene rubber (SBR), polyvinylpyrrolidone (PVP), polyvinylidene fluoride (PVDF), polybenzimidazole, polyimide, polyvinyl acetate, polyacrylonitrile, polyvinyl alcohol, starch, hydroxypropylmethylcellulose, regenerated cellulose, polyvinylpyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylenesulfone, polyacetal, polyphenylene ether, polybutylene terephthalate, ethylene-propylene-diene terpolymer (EPDM), sulfonated EPDM, fluorocarbon rubber and various copolymers, preferably one or more components selected from CMC, SBR, PVP and PVDF. As a preferred, non-limiting example, the binder is PVDF. In the positive electrode material, the blended amount of the binder may for example be 0.1 wt% - 10 wt%, preferably 1 wt% - 5 wt%.

In addition to the positive electrode active material, a suitable amount of a conductive agent is added to the positive electrode material, to reduce the battery internal resistance. The conductive agent may comprise optional components. The conductive agent may be selected from one or more of superconductive carbon black (SP), carbon nanotubes (CNT), conductive carbon black, carbon fibre and graphite conductive agents. Preferably, the conductive agent comprises SP and CNT. Further preferably, the CNT are helical carbon nanotubes (HCNT). More preferably, the conductive agent is SP. The content of the conductive agent in the positive electrode material is 0.1 wt% - 3 wt%, preferably 1 wt% - 2.5 wt%, more preferably 2 wt% - 2.5 wt%, and further preferably 2.2 wt%. The content of SP in the positive electrode material is 0.1 wt% - 3 wt%, preferably 1 wt% - 2.5 wt%, more preferably 2 wt% - 2.5 wt%, and further preferably 2.2 wt%. The content of CNT in the positive electrode material is 0.01 wt% - 1.5 wt%, preferably 0.01 wt% - 0.4 wt%, more preferably 0 wt% (i.e. the positive electrode material contains no CNT).

In addition, the positive electrode material may further comprise another additive, such as lithium carbonate (Li₂CO₃), the content thereof being 0.1 wt% - 3 wt%, preferably 0.2 wt% - 2 wt%, more preferably 0.3 wt% - 0.7 wt%, and further preferably 0.5 wt%. The lithium carbonate acts as an overcharge gas-generating additive; when the operating voltage of the lithium ion battery reaches a certain level, the lithium carbonate decomposes, generating carbon dioxide and thereby activating a current interrupt device (CID), thus ensuring the safety of the lithium ion secondary battery.

In a preferred embodiment, the positive electrode comprises a positive electrode material layer and a positive electrode current collector made of aluminium foil, wherein the positive electrode material layer comprises positive electrode material applied to two surfaces of the positive electrode current collector. In the positive electrode material, NCM811 acts as the positive electrode active material, SP acts as the conductive agent, PVDF acts as the binder, and Li₂CO₃ is also included. The mass ratio of NCM811 : SP : Li₂CO₃ : PVDF is (93 - 99) : (0.1 - 3) : (0.1 - 3) : (1 - 2), preferably (94 - 98) : (1 - 2.5) : (0.2 - 2) : (1.2 - 1.6), more preferably (95 - 97) : (2 - 2.5) : (0.3 - 0.7) : (1.2 - 1.4), and further preferably 96 : 2.2 : 0.5 : 1.3. In an exemplary embodiment, the mass ratio of NCM811 : SP : HCNT : Li₂CO₃ : PVDF : PVP in the positive electrode material is 96 : 0.43 : 1.2 : 0.5 : 1.3 : 0.57. In an exemplary embodiment, the mass ratio of NCM811 : SP : HCNT : Li₂CO₃ : PVDF : PVP in the positive electrode material is 96 : 1.81 : 0.6 : 0.5 : 1.3 : 0.29. In a preferred embodiment, in the positive electrode material, the conductive agent is SP, and no HCNT is contained, wherein the mass ratio of NCM811 : SP : Li₂CO₃ : PVDF is 96 : 2.2 : 0.5 : 1.3.

In a preferred embodiment, positive electrode uncoated parts are provided at two ends of the positive electrode current collector. The positive electrode uncoated part is a region on one or two surfaces of the positive electrode where no positive electrode material layer is formed. The positive electrode uncoated part is equipped with a positive electrode tab. Insulating tape is wound on a part of the positive electrode tab that projects from an electrode assembly, to prevent short circuits. The positive electrode tab is electrically connected to a cover assembly.

In a further preferred embodiment, the positive electrode comprises no positive electrode tab, and is electrically connected to the cover assembly directly using a positive electrode current collector uncoated part.

Furthermore, the positive electrode material may be formed by coating with a slurry containing a solvent. Examples of the solvent are N-methylpyrrolidone (NMP), cyclohexanone, water, toluene and xylene, but the content of the present disclosure is not limited to this. Preferably, the solvent used for the positive electrode material is NMP. Based on the total weight of the positive electrode material, the amount of the solvent may be about 10 - 500 parts by weight, for example. When the amount of the solvent is within this range, an active material layer may be formed easily; preferably, the amount of the solvent in the positive electrode material is 40 wt% - 60 wt%.

The electrolyte may for example be an organic electrolyte. The organic electrolyte is prepared by dissolving a lithium salt in an organic solvent. The organic solvent may be any suitable material that can be used as an organic solvent. Examples of the organic solvent are ethylene carbonate, vinyl ethylene carbonate, propylene carbonate, ethylene carbonate, fluoroethylene carbonate, butylene carbonate, dimethyl carbonate, diethyl carbonate, ethyl methyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolane, 4-methyl dioxolane, N,N-dimethylformamide, dimethylacetamide, dimethyl sulfoxide, dioxane, 1,2-dimethoxyethane, sulfolane, ethylene dichloride, chlorobenzene, nitrobenzene, diethylene glycol, dimethyl ether or combinations thereof. The lithium salt may be any lithium salt commonly used in the art. For example, the lithium salt is LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ+1SO₂)(C_{y}F_{2y}+1SO₂) (wherein x and y are natural numbers), LiCl, LiI or any mixture thereof.

In addition to the organic electrolytes mentioned above, other exemplary electrolytes further include non-aqueous electrolytes, organic solid electrolytes, inorganic solid electrolytes, etc. Examples of the organic solid electrolytes include polyethylene derivatives, polyethylene oxide derivatives, polypropylene oxide derivatives, phosphate ester derivatives, polyester sulfide, polyvinyl alcohol, PVDF, and polymers comprising ion dissociative groups. Examples of the inorganic solid electrolytes are nitride solid electrolytes, oxynitride solid electrolytes and sulfide solid electrolytes. Examples of the inorganic solid electrolytes are Li₃N, LiI, Li₅NI₂, Li3N-LiI-LiOH, Li₂SiS₃, Li₄SiO₄, Li₄SiO₄-LiI-LiOH and Li₃PO₄-Li₂S-SiS₂.

### Particular examples

The examples below describe some embodiments of the present invention; they provide an explanation of the present invention, but the present invention is not limited to this.

### Example 1: The effect of SWCNT content in the negative electrode material on battery temperature rise

The effect of negative electrode materials having different SWCNT contents on lithium ion battery temperature rise was evaluated, wherein (in mass ratios):
Group A: SiOₓ : SP : SWCNT : CMC : SBR = 93.58 : 3 : 0.12 : 1.5 : 1.8
Group B: SiOₓ : SP : SWCNT : CMC : SBR = 93.58 : 3.13 : 0.06 : 1.43 : 1.8
Group C: SiOₓ : SP : CMC : SBR = 93.58 : 3.25 : 1.37 : 1.8
wherein the negative electrode current collector was copper foil; the positive electrode active material was NCM811, the binder was PVDF, the conductive agent was SP, the overcharge gas additive was Li₂CO₃, the mass ratio of NCM811 : SP : Li₂CO₃ : PVDF was 96 : 2.2 : 0.5 : 1.3, the positive electrode current collector was aluminium foil, the liquid electrolyte was an organic liquid electrolyte, and the separator was a polypropylene separator.

The lithium ion battery may be made by using a method known to those skilled in the art.

Temperature rise test conditions:
Charging: 6 A CC to 4.2 V, CV to 100 mA;
Left to stand for: 10 min;
Discharging: 30 A/40 A, DC to 2.5 V, or 75°C cut-off;
Left to stand for: 30 min;

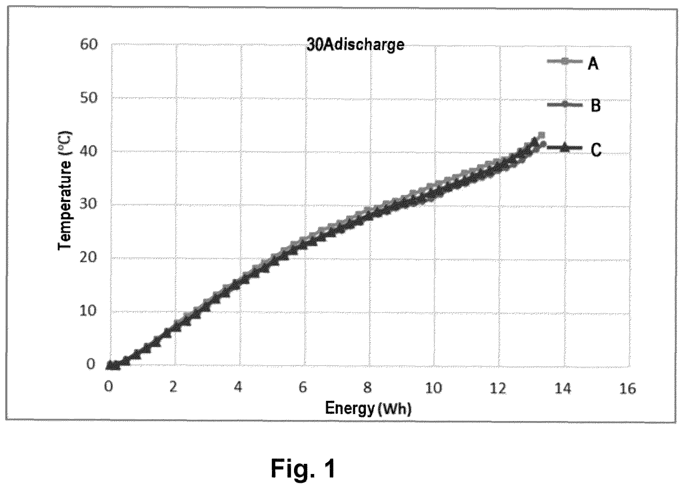

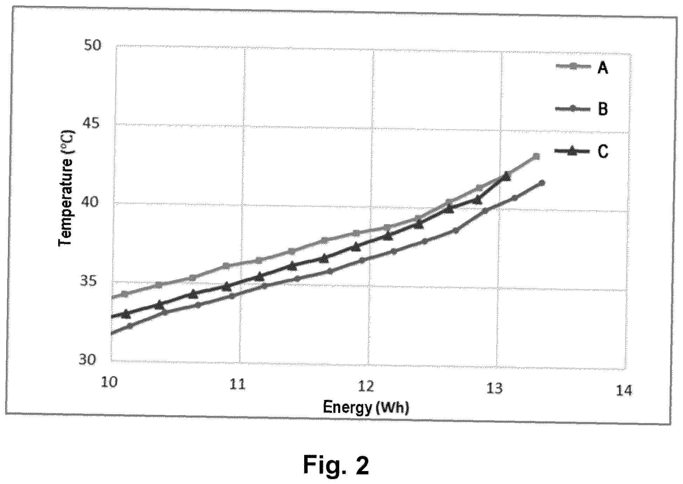

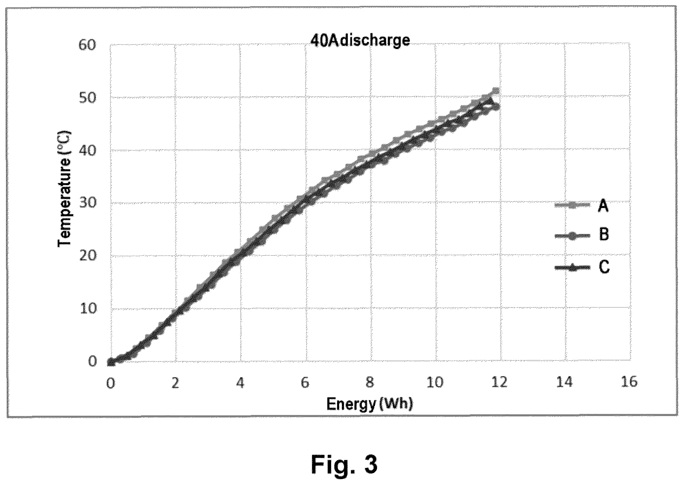

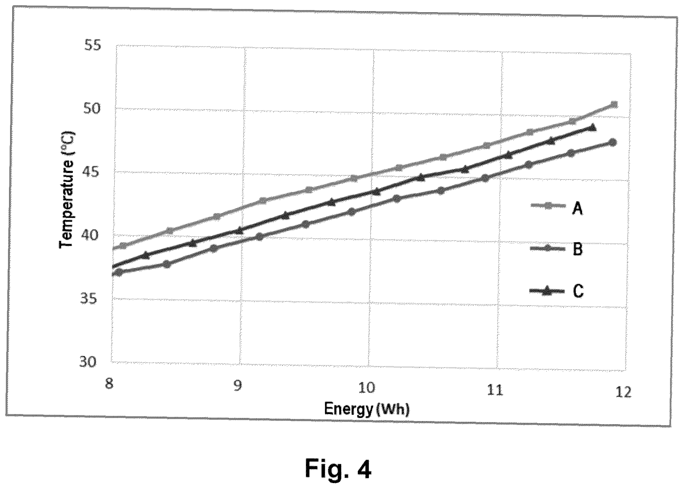

It can be seen from Figs. 1 - 4 that the temperature rise is lower for group B, in both the 30 A and the 40 A discharge situations.

### Example 2: The effect of HCNT content in the positive electrode material on battery temperature rise

The effect of positive electrode materials having different HCNT contents on lithium ion battery temperature rise was evaluated, wherein (in mass ratios):
Group A: NCM811 : SP : HCNT : Li₂CO₃ : PVDF : PVP = 96 : 0.43 : 1.2 : 0.5 : 1.3 : 0.57
Group B: NCM811 : SP : HCNT : Li₂CO₃ : PVDF : PVP = 96 : 1.81 : 0.6 : 0.5 : 1.3 : 0.29
Group C: NCM811 : SP : Li₂CO₃ : PVDF = 96 : 2.2 : 0.5 : 1.3
wherein the positive electrode current collector was aluminium foil; the negative electrode active material was SiOₓ, negative electrode binder 1 was SBR, negative electrode binder 2 was CMC, the negative electrode conductive agent was SP, the mass ratio of SiOₓ : SP : CMC : SBR was 93.58 : 3.25 : 1.37 : 1.8, the negative electrode current collector was copper foil; the liquid electrolyte was an organic liquid electrolyte; and the separator was a polypropylene separator.

The lithium ion battery may be made by using a method known to those skilled in the art.

Temperature rise test conditions:
Charging: 6 A CC to 4.2 V, CV to 100 mA;
Left to stand for: 10 min;
Discharging: 30 A/40 A, DC to 2.5 V, or 75°C cut-off;
Left to stand for: 30 min;

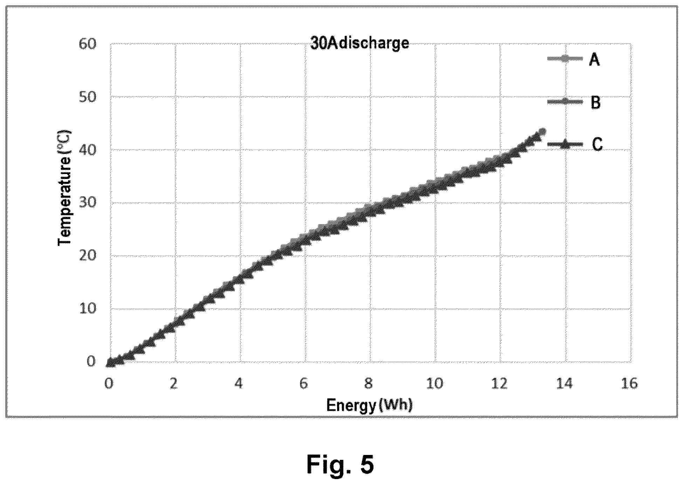

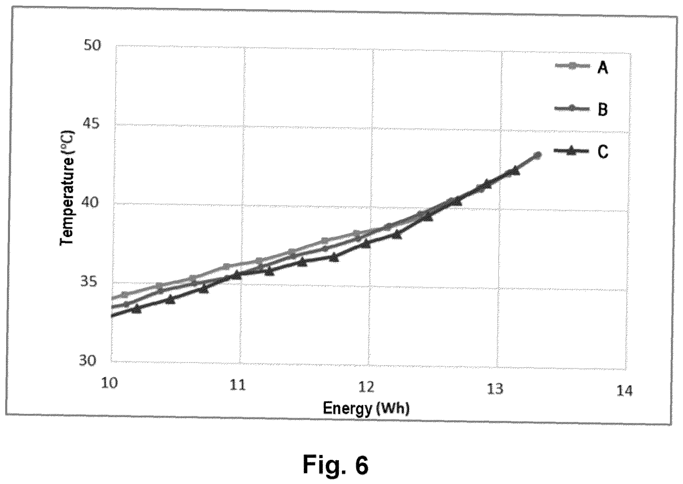

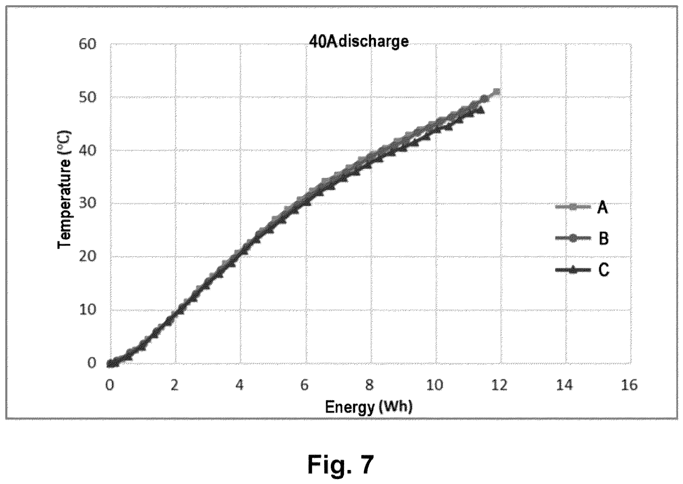

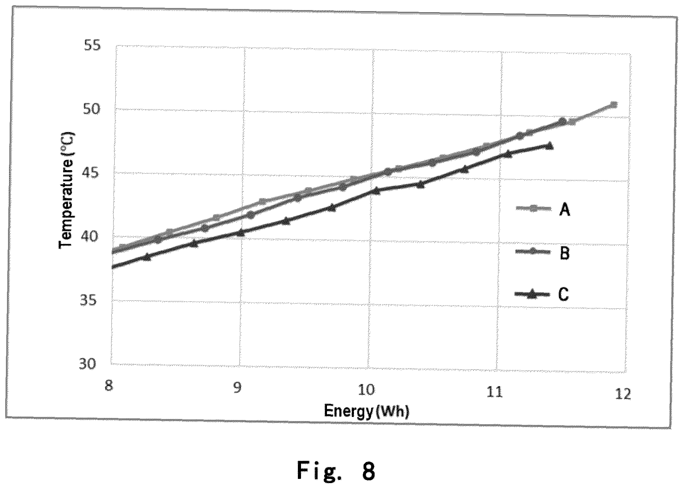

It can be seen from Figs. 5-8 that reducing the content of HCNT in the positive electrode material mitigates the temperature rise to a certain extent.

The above description of various embodiments of the present invention is provided to a person skilled in the art for descriptive purposes. It is not intended that the present invention be exclusive or limited to a single disclosed embodiment. Those skilled in the field of the above teaching will understand various replacements and variants of the present invention. Thus, although some alternative embodiments have been specifically described, those skilled in the art will understand, or develop with relative ease, other embodiments. The present invention is intended to include all replacements, modifications and variants of the present invention described herein, as well as other embodiments falling within the spirit and scope of the present invention described above.

## Claims

1. Negative electrode for a lithium ion battery, **characterized by** comprising a negative electrode current collector and a negative electrode material applied to the negative electrode current collector, the negative electrode material containing a conductive agent, the conductive agent comprising SP and CNT, wherein the mass ratio of SP to CNT is 30 - 1500, preferably 35 - 100, more preferably 40 - 70, and further preferably 50 - 55.

2. Negative electrode for a lithium ion battery according to Claim 1, **characterized in that** the content of the conductive agent in the negative electrode material is 1 wt% - 4 wt%, preferably 3 wt% - 3.5 wt%, more preferably 3.1 wt% - 3.3 wt%, and further preferably 3.19 wt%.

3. Negative electrode for a lithium ion battery according to Claim 1, **characterized in that** the content of SP in the negative electrode material is 1 wt% - 4 wt%, preferably 3 wt% - 3.5 wt%, more preferably 3.1 wt% - 3.3 wt%, and further preferably 3.13 wt%.

4. Negative electrode for a lithium ion battery according to Claim 1, **characterized in that** the content of CNT in the negative electrode material is 0.01 wt% - 0.12 wt%, preferably 0.02 wt% - 0.1 wt%, more preferably 0.05 wt% - 0.08 wt%, and further preferably 0.06 wt%.

5. Negative electrode for a lithium ion battery according to Claim 1, **characterized in that** in the negative electrode material, the CNT is SWCNT; preferably, the negative electrode material further comprises a negative electrode active material and a binder; the negative electrode active material is selected from one or more of graphite, soft carbon, hard carbon, silicon-carbon composites, elemental silicon and SiOₓ; and the binder is selected from one or more of CMC, SBR, PVP, PAA and PVDF.

6. Negative electrode for a lithium ion battery according to Claim 5, **characterized in that** in the negative electrode material, the negative electrode active material is SiOₓ and the binder is CMC and SBR.

7. Negative electrode for a lithium ion battery according to Claim 6, **characterized in that** the mass ratio of SiOₓ : SP : SWCNT : CMC : SBR in the negative electrode material is (90 - 95) : (1 - 4) : (0.01 - 0.12) : (1 - 2) : (1 - 2), preferably (93 - 94) : (3 - 3.5) : (0.02 - 0.1) : (1.2 - 1.6) : (1.6 - 2), more preferably (93.4 - 93.8) : (3.1 - 3.3) : (0.05 - 0.08) : (1.3 - 1.5) : (1.7 - 1.9), and further preferably 93.58 : 3.13 : 0.06 : 1.43 : 1.8.

8. Lithium ion battery, comprising a positive electrode, a negative electrode, an electrolyte and a casing, **characterized in that** the negative electrode is the negative electrode for a lithium ion battery according to any one of Claims 1-7.

9. Lithium ion battery according to Claim 8, **characterized in that** the positive electrode comprises a positive electrode current collector and a positive electrode material applied to the positive electrode current collector, the positive electrode material containing a conductive agent, the conductive agent comprising SP; preferably, the content of the conductive agent in the positive electrode material is 0.1 wt% - 3 wt%, preferably 1 wt% - 2.5 wt%, more preferably 2 wt% - 2.5 wt%, and further preferably 2.2 wt%; preferably, the content of SP in the positive electrode material is 0.1 wt% - 3 wt%, preferably 1 wt% - 2.5 wt%, more preferably 2 wt% - 2.5 wt%, and further preferably 2.2 wt%.

10. Lithium ion battery according to Claim 9, **characterized in that** the conductive agent further comprises CNT, and the content of CNT in the positive electrode material is 0.01 wt% - 1.5 wt%, preferably 0.01 wt% - 0.4 wt%, and more preferably 0 wt%; preferably, in the positive electrode material, the CNT is HCNT.

11. Lithium ion battery according to Claim 8, **characterized in that** the positive electrode material comprises a positive electrode active material and a binder; the positive electrode active material is selected from one or more of lithium nickel manganese cobalt oxide, lithium cobalt oxide, lithium nickel oxide, lithium manganese oxide, lithium nickel cobalt aluminium oxide and lithium iron phosphate; and the binder is selected from one or more of CMC, SBR, PVP and PVDF; preferably, in the positive electrode material, the positive electrode active material is NCM811 and the binder is PVDF; preferably, the positive electrode material further comprises Li₂CO₃, the content thereof being 0.1 wt% - 3 wt%, preferably 0.2 wt% - 2 wt%, more preferably 0.3 wt% - 0.7 wt%, and further preferably 0.5 wt%.

12. Lithium ion battery according to Claim 11, **characterized in that** the mass ratio of NCM811 : SP : Li₂CO₃ : PVDF in the positive electrode material is (93 - 99) : (0.1 - 3) : (0.1 - 3) : (1 - 2), preferably (94 - 98) : (1 - 2.5) : (0.2 - 2) : (1.2 - 1.6), more preferably (95 - 97) : (2 - 2.5) : (0.3 - 0.7) : (1.2 - 1.4), and further preferably 96 : 2.2 : 0.5 : 1.3.

13. Lithium ion battery according to Claim 8, **characterized in that** the electrolyte is an organic electrolyte, a non-aqueous electrolyte, an organic solid electrolyte or an inorganic solid electrolyte.

14. Lithium ion battery according to Claim 8, **characterized in that** the lithium ion battery does not comprise a tab.

15. Use of the negative electrode for a lithium ion battery according to any one of Claims 1 - 7 for reducing lithium ion battery temperature rise.
